# EUROPEAN PATENT APPLICATION

(11) **EP 4 787 789 A1**
(43) Date of publication of application: **05.08.2026**
(21) Application number: 26154478.7
(22) Date of filing: 27.01.2026
(51) Int. Cl.: H04L 25/02

(54) **WIDEBAND FRONTEND IN A RECEIVER**

(30) Priority: 29.01.2025 US 202519040240
(71) Applicant: Avago Technologies International Sales Pte. Limited, Singapore 768923 (SG)
(72) Inventor: Ibrahim, Ahmed Abdelmoneim E., Irvine, 92618 (US); Zhang, Heng, Irvine, 92620 (US); Tong, Haitao, Laguna Hills, 92653 (US); Cui, Delong, Tustin, 92782 (US); Nazemi, Ali, Aliso Viejo, 92656 (US); Cao, Jun, Irvine, 92620 (US)
(74) Representative: Dilg, Haeusler, Schindelmann Patentanwaltsgesellschaft mbH

(57) **Abstract**

In an example, an apparatus for supplying a voltage to a termination in a receiver, the circuit includes: a first circuit coupled to a current source through a first resistor; first and second inverters coupled between a supply voltage and a first node between the first resistor and the current source; second and third resistors; first and second transistors, gates of the first and second transistors coupled to outputs of the first and second inverters, respectively, drains of the first and second transistors coupled to a second node, sources of the first and second transistors coupled to a third node through the second and third resistors, respectively; wherein the first circuit is coupled to the third node and the second node is configured to supply the voltage to the termination in the receiver.

## Description

### BACKGROUND

Recent developments in communication and computing devices demand high data rates. For example, network devices (e.g., switches, routers, hubs, etc.) may exchange data at high speed (e.g., about 100 Gigabits per second (Gbps) or more) to stream data in real-time or process a large amount of data in a seamless manner. A network device can include an integrated circuit (IC) configured to receive, process, and send data. The integrated circuit can include a receiver configured to receive signals from a transmission medium. To save costs and enable higher component density in the network device, it is desirable to eliminate the external alternating current (AC) capacitor(s) used for AC-coupling the receiver to the transmission medium. External AC capacitor(s) can result in discontinuity and signal integrity issues. Integrating the AC capacitor onto the IC can help improve signal integrity. However, one challenge in integrating the AC capacitor on the IC is that the signal termination in the IC that is coupled to the transmission medium will experience large common-mode variations, since without the external AC capacitors the signal termination is direct current (DC)-coupled to the transmission medium. Large common-mode variations can cause issues in receiver front-end design, leading to performance degradations in terms of gain, bandwidth, linearity, and return loss, as well as functionality issues (e.g., reliability).

### SUMMARY

In an embodiment, an apparatus for supplying a voltage to a termination in a receiver is described. The apparatus can include a first circuit coupled to a current source through a first resistor. The apparatus can include first and second inverters coupled between a supply voltage and a first node between the first resistor and the current source. The apparatus can include second and third resistors. The apparatus can include first and second transistors, gates of the first and second transistors coupled to outputs of the first and second inverters, respectively, drains of the first and second transistors coupled to a second node, sources of the first and second transistors coupled to a third node through the second and third resistors, respectively. The first circuit can be coupled to the third node and the second node is configured to supply the voltage to the termination in the receiver.

In an embodiment, a receiver can include an analog front-end (AFE) having an input coupled to a transmission medium through a capacitor, a termination coupled to the input of the AFE, and a first circuit configured to supply a voltage to the termination. The first circuit can include a second circuit coupled to a current source through a first resistor. The first circuit can include first and second inverters coupled between a supply voltage and a first node between the first resistor and the current source. The first circuit can include second and third resistors. The first circuit can include first and second transistors, gates of the first and second transistors coupled to outputs of the first and second inverters, respectively, drains of the first and second transistors coupled to a second node, sources of the first and second transistors coupled to a third node through the second and third resistors, respectively. The second circuit can be coupled to the third node and the second node is configured to supply the voltage to the termination.

In an embodiment, a communication system can include a transmission medium, an integrated circuit (IC) coupled to the transmission medium, the IC including an analog front-end (AFE) having an input coupled to the transmission medium through a capacitor, the IC including a termination coupled to the input of the AFE, and a first circuit in the IC configured to supply a voltage to the termination. The first circuit can include a second circuit coupled to a current source through a first resistor. The first circuit can include first and second inverters coupled between a supply voltage and a first node between the first resistor and the current source. The first circuit can include second and third resistors. The first circuit can include first and second transistors, gates of the first and second transistors coupled to outputs of the first and second inverters, respectively, drains of the first and second transistors coupled to a second node, sources of the first and second transistors coupled to a third node through the second and third resistors, respectively. The second circuit is coupled to the third node and the second node is configured to supply the voltage to the termination.

### BRIEF DESCRIPTION OF THE DRAWINGS

Fig. 1 is a block diagram depicting a communication circuit according to some embodiments.
Fig. 2 is a schematic diagram depicting a portion of a receiver according to embodiments.
Fig. 3A is a schematic diagram depicting a termination resistor in series with a transmission gate switch.
Fig. 3B is a schematic diagram depicting a termination resistor in series with a switch according to some embodiments.
Fig. 3C is a schematic diagram depicting a termination resistor in series with a switch according to some embodiments.
Fig. 4A is a schematic diagram depicting a common-mode sensing circuit according to some embodiments.
Fig. 4B is a schematic diagram depicting an inverter according to some embodiments.
Fig. 4C is a schematic diagram depicting a common-mode sensing circuit according to further embodiments.
Fig. 5A is a schematic diagram depicting a common-mode sensing circuit according to some embodiments.
Fig. 5B is a schematic diagram depicting a common-mode sensing circuit according to some embodiments.

### DETAILED DESCRIPTION

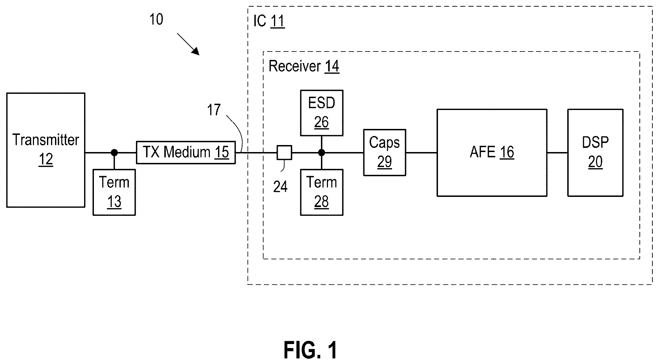

Fig. 1 is a block diagram depicting a communication circuit 10 according to some embodiments. Communication circuit 10 can include a transmitter 12 coupled to a receiver 14 by a transmission medium 15 (shown as TX medium 15). A transmitter may be a circuit that transmits a signal. Transmitter 12 may be a circuit that transmits a signal through transmission medium 15. A receiver may be a circuit that observes a signal. Receiver 14 may be a circuit that observes a signal propagating through transmission medium 15. A transmission medium may be a physical pathway for signals. Transmission medium 15 may be a physical pathway for propagating a signal between transmitter 12 and receiver 14. Receiver 14 may be formed on a semiconductor substrate of an integrated circuit (IC) 11. An IC may be a set of circuits formed by a semiconductor material and conductive interconnect disposed on the semiconductor material. Conductive interconnect can be structures that form or electrically connect circuit elements. Various semiconductor materials and semiconductor fabrication processes are known for fabricating an IC. One skilled in the art can select among one or more such materials and processes based on the description of the examples and embodiments herein. The complementary metal-oxide-semiconductor (CMOS) fabrication process for forming integrated circuits on silicon is widely used and well-known. Accordingly, for purposes of clarity, some examples and embodiments are described below within the context of an IC formed using a CMOS fabrication process.

In some examples, transmission medium 15 can include one or more transmission lines. A transmission line may be a structure designed to carry electromagnetic waves. The term applies when the structure is long enough that the wave nature of the transmission must be considered. A transmission line can be electrical, optical, or a combination of electrical and optical. The transmission line(s) of TX medium 15 can be electrical or a combination of electrical and optical (e.g., communication circuit 10 can include an electrical-to-optical converter on the transmitter-side and an optical-to-electrical converter on the receiver-side (not shown)). In some examples, transmission medium 15 can include a wireless medium (e.g., communication circuit 10 can include an antenna on the transmitter-side and an antenna on the receiver-side (not shown)).

Communication circuit 10 can include a termination 13 on the transmitter-side of TX medium 15. A termination may be an impedance that matches or approximately matches the characteristic impedance of a transmission line. While shown separate for purposes of example, in some cases, transmitter 12 can include termination 13.

Receiver 14 can include an analog front-end (AFE) 16 and a digital signal processor (DSP) 20. An input of AFE 16 can receive an electrical signal from transmission medium 15 through pad(s) 24. An input of DSP 20 can be coupled to an output of AFE 16. Pad(s) 24 may be metallization of IC 11, the metallization being coupled to transmission line(s) 17 of transmission medium 15. Transmitter 12 can couple a signal to TX medium 15 using either single-ended signaling or differential signaling. Single-ended signaling may be transmission of a signal over a single transmission line relative to electrical ground. Electrical ground may be a reference voltage against which all other voltages in communication circuit 10 can be compared (e.g., 0 V). The voltage level of the signal on the single transmission line can represent the data being transmitted. Differential signaling may be transmission of a signal over two transmission lines. The voltage difference between the two transmission lines can represent the data being transmitted. Thus, in case of single-ended signaling, receiver 14 can include a pad 24 electrically coupled to a transmission line 17. In case of differential signaling, receiver 14 can include two pads 24 electrically coupled to two transmission lines 17, respectively.

An AFE may be a circuit that conditions an analog signal. AFE 16 may be a circuit configured to condition an analog signal observed on transmission medium 15. An analog signal may be a signal continuous in time and varying in some quantity. A voltage signal, for example, may be an analog signal that varies in voltage over continuous time. The electrical signal on transmission line(s) 17 can be an analog signal conditioned by AFE 16. Receiver 14 can include electrostatic discharge (ESD) circuit(s) 26 coupled to pad(s) 24. An ESD circuit may be a circuit that provides a low-impedance path for ESD current flow (e.g., ESD diodes). Receiver 14 can include a termination 28. While shown separate for purposes of example, in some cases, AFE 16 can include termination 28. Receiver 14 can include capacitors 29 coupled between pad 24 and AFE 16. Capacitors 29 can AC-couple AFE 16 to TX medium 15. AC coupling may allow AC signals to pass to AFE 16 and can mitigate or remove a DC offset from the signals. In the embodiment, external AC-coupling capacitors (external to IC 11) are omitted. In such case, ESD 26 and termination 28 are DC-coupled to TX medium 15 through pad 24. DC coupling may allow both AC and DC signals (DC offset) to pass through a connection.

AFE 16 can include an analog-to-digital converter (ADC). An ADC may be a circuit that converts an analog signal into a digital signal. The ADC in AFE 16 may be a circuit that converts the analog signal as captured and held by AFE 16 to a digital signal. A digital signal may be a signal that is discrete in time and quantized in amplitude. AFE 16 can condition the analog signal by amplification, for example. An amplifier may be a circuit that applies a gain to the magnitude of a signal, e.g., the analog signal at the input of AFE 16. A DSP may be a circuit that processes digital signals. DSP 20 can process the digital signal output from AFE 16.

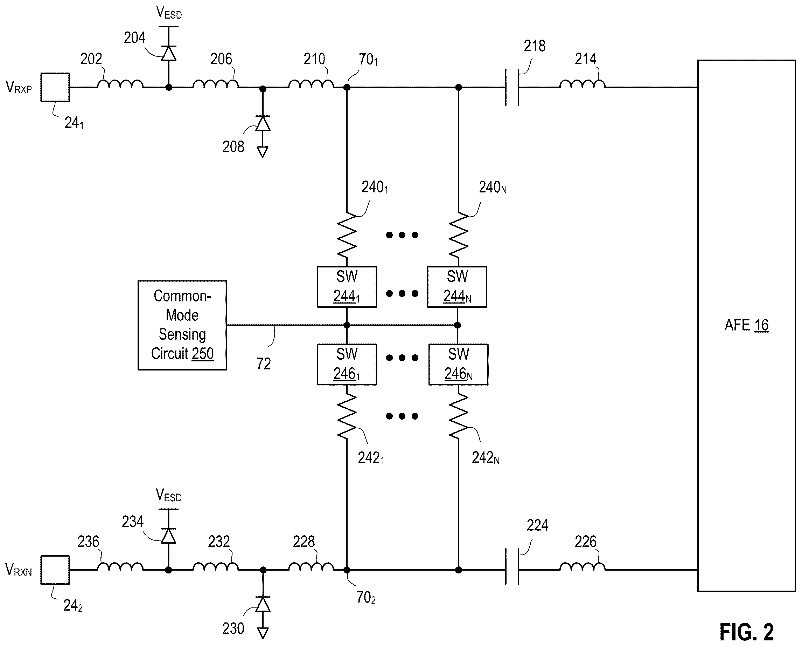

Fig. 2 is a schematic diagram depicting a portion of receiver 14 according to embodiments. In the embodiment, receiver 14 can be configured to receive a differential signal. Receiver 14 can include pads 24₁ and 24₂ respectively coupled to two transmission lines 17. A voltage signal V_{RXP}(t) (shown simplified as V_{RXP}) can be received at pad 24₁ and a voltage signal V_{RXN}(t) (shown simplified as V_{RXN}) can be received at pad 24₂. The voltage signal V_{RXP} can be 180 degrees out-of-phase with respect to the voltage signal V_{RXN}. Pad 24₁ can be coupled to a node 70₁ through a series of inductors 202, 206, and 210. A diode 204 can be coupled between an ESD voltage (V_{ESD}) and the node between inductors 202 and 206. A diode 208 can be coupled between electrical ground and the node between inductors 206 and 210. Diodes 204 and 208 can implement part of ESD circuit 26 to provide ESD protection at pad 24₁. Pad 24₂ can be coupled to a node 70₂ through a series of inductors 236, 232, 228. A diode 234 can be coupled between an ESD voltage (V_{ESD}) and the node between inductors 236 and 232. A diode 230 can be coupled between electrical ground and the node between inductors 232 and 228. Diodes 234 and 230 can implement part of ESD circuit 26 to provide ESD protection at pad 24₂.

A node may be a point in a circuit where two or more circuit elements are connected. A node can be shown in the drawings as a filled circle at a wire junction. Note that, for ease of illustration, a node may be shown as two or more separate junctions connected by only wire(s) and no circuit elements (e.g., a short-circuit connection). In such case, a reference numeral assigned to the node can be at one of the junctions or at one of the wires between the junctions, all of which collectively represent the node.

One input of AFE 16 can be coupled to node 70₁ through capacitor 218 and inductor 214. Another input of AFE 16 can be coupled to node 70₂ through capacitor 224 and inductor 226. Capacitors 218 and 224 can be part of capacitors 29 to provide AC-coupling for AFE 16.

Resistors 240₁...240_{N} (where N is an integer greater than zero) can be coupled in parallel between node 70₁ and a node 72. Resistors 240₁ through 240_{N} can be coupled to node 72 through switches 244₁ through 244_{N}, respectively. Resistors 242₁...242_{N} can be coupled in parallel between node 70₂ and node 72. Resistors 242₁ through 242_{N} can be coupled to node 72 through switches 246₁ through 246_{N}. A common-mode sensing circuit 250 can be coupled to node 72 to provide common-mode voltage to switches 244₁...244_{N} and 246₁...246_{N}. Resistors 240₁...240_{N} and resistors 242₁...242_{N} can be termination resistors for TX medium 15. Switches 244₁...244_{N} and switches 246₁...246_{N} can be enabled or disabled to control the resistance provided by termination 28. The receiver can include a control circuit (not shown) for controlling the switches, e.g., enabling/disabling the switches.

An AFE used in high-speed receivers can have a termination matching the characteristic impedance of the transmission medium (e.g., 50 ohms). This termination can be realized using a segmented resistor (e.g., resistors in series with switches, as shown in Fig. 2). This allows for calibration of the termination in the receiver in the presence of process, voltage, and temperature (PVT) variations in the resistors.

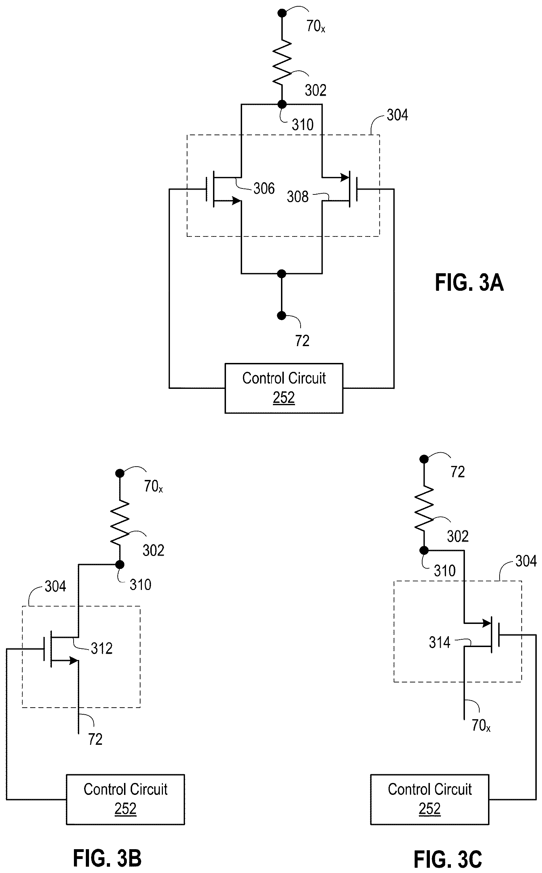

Fig. 3A is a schematic diagram depicting a termination resistor in series with a transmission gate switch. A resistor 302 can be any of the termination resistors shown in Fig. 2, e.g., any of resistors 240₁...240_{N} and resistors 242₁...242_{N}. A node 70ₓ is shown, which can be either node 70₁ or node 70₂. A switch 304 can be any of the switches shown in Fig. 2 corresponding to the resistor, e.g., any of switches 244₁...244_{N} and switches 246₁...246_{N}. Switch 304 can be a transmission gate comprising a transistor 306 and a transistor 308.

Transistors 306 and 308 can be field effect transistors (FETs). A FET can be a four-terminal device having gate, source, drain, and substrate terminals. Unless otherwise indicated, the transistors described herein have their substrate terminals coupled supply and ground , as such, the substrate terminals are not explicitly shown. FETs can be p-channel FETs or n-channel FETs, where n and p refer to the type of doping in the semiconductor material and the type of majority charge carrier, as is known in the art. Consistent with convention, any n-channel transistors are shown schematically with the source as an arrow facing away from the gate and any p-channel transistors are shown schematically with the source as an arrow facing towards the gate. There are many types of FETs known in the art. One skilled in the art can select among one or more such FETs based on the description of the examples and embodiments herein. Metal-oxide semiconductor field-effect transistors (MOSFETs) are widely used and well-known FETs in CMOS-based ICs. P-channel MOSFETs can be referred to as PMOS transistors and N-channel MOSFETs can be referred to as NMOS transistors. Accordingly, for purposes of clarity, various examples and embodiments are described below within the context of NMOS transistors, PMOS transistors, or a combination thereof.

Transistor 306 can be an NMOS transistor and transistor 308 can be a PMOS transistor 308. The drain of transistor 306 can be coupled to a node 310 and the source of transistor 306 can be coupled to node 72. A source of transistor 308 can be coupled to node 310 and a drain of transistor 308 can be coupled to node 72. Resistor 302 can be coupled between node 70ₓ and node 310. A control circuit 252 can be coupled to the gates of transistors 306 and 308. Control circuit 252 can turn on the transistors 306 and 308 to connect nodes 310 and 72. Control circuit 242 can turn off transistors 306 and 308 to disconnect nodes 310 and 72. Thus, control circuit 252 can turn on switch 304 to connect resistor 302 to the common-mode voltage on node 72 or turn off switch 304 to disconnect resistor 302 from the common-mode voltage on node 72.

Fig. 3B is a schematic diagram depicting a termination resistor in series with a switch according to some embodiments. Elements of Fig. 3B that are the same or similar to those of Fig. 3A are designated with identical reference numerals and described above. In the embodiment, the transmission gate can be replaced with a single NMOS transistor (e.g., a transistor 312). The source of transistor 312 can be coupled to node 72 and the drain of transistor 312 can be coupled to node 310 (e.g., resistor 310). The gate of transistor 312 can be coupled to control circuit 252.

Fig. 3C is a schematic diagram depicting a termination resistor in series with a switch according to some embodiments. Elements of Fig. 3C that are the same or similar to those of Fig. 3A are designated with identical reference numerals and described above. In the embodiment, the transmission gate can be replaced with a single PMOS transistor (e.g., a transistor 314). The drain of transistor 314 can be coupled to node 70ₓ and the source of transistor 314 can be coupled to node 310 (e.g., resistor 302). Resistor 302 in this embodiment can be coupled between nodes 72 and 310.

Referring to Figs. 2 and 3A-C, a receiver in an IC can be DC-coupled to the transmission medium and include integrated AC-coupling capacitors (e.g., capacitors 218, 224). For electrical transmission media, the input common-mode voltage can have one range. For optical transmission media, the input common-mode voltage can have another range different than electrical media. To reduce parasitic capacitance and maintain high bandwidth, the transistors in switches 244, 246 can be core devices. To meet reliability requirements with a desired signal swing, the DC bias voltage across the transistor terminals should be within a certain voltage limit. This can pose a challenge to receiver design. To enable/disable a switch with a wide range of common-mode voltage, a transmission gate can be used (e.g., as shown in Fig. 3A). The common-mode voltage on node 72 can differ depending on the input common-mode voltage of the particular type of transmission medium in order to maintain the desired voltage across the switch transistor terminals (e.g., within the voltage limit). Common mode sensing circuit 250 can be used to control the common-mode voltage on node 72, allowing for IC 11 to be coupled to different types of transmission medium that may have different ranges of common-mode input voltage. However, use of the transmission gate can increase parasitic capacitance in the input network (since each transmission gate uses two transistors). This can result in decreased bandwidth. Thus, in embodiments, a single transistor can be used to implement each switch (e.g., an NMOS transistor as shown in Fig. 3B or a PMOS transistor as shown in Fig. 3C). The embodiments of Figs. 3B and 3C can decrease parasitic capacitance in the input network and can increase bandwidth.

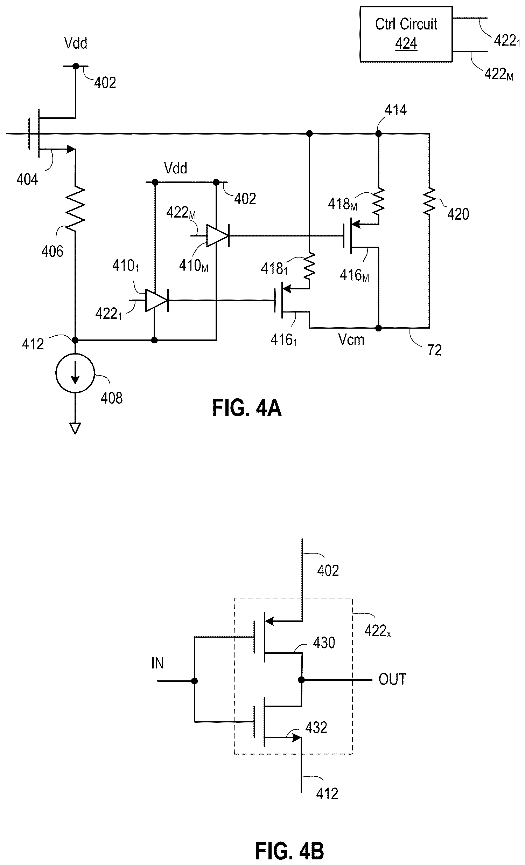

Fig. 4A is a schematic diagram depicting common-mode sensing circuit 250 according to some embodiments. The embodiment shown can generate a common-mode voltage for NMOS switches (e.g., Fig. 3B). Common-mode sensing circuit 250 can include a transistor 404 and transistors 416₁...416_{M} (where M is an integer greater than zero). The drain of transistor 404 can be coupled to a node 402 that provides a supply voltage (Vdd). The source of transistor 404 can be coupled to a current source 408 through a resistor 406. That is, the source of transistor 404 can be coupled to node 412 through resistor 406. Current source 408 can be coupled between node 412 and ground. Common-mode sensing circuit 250 can include inverters 422₁...422_{M}. An inverter may be a circuit that logically inverts its input at its output (e.g., generates a low voltage from a high input voltage or a high voltage from a low input voltage). Common-mode sensing circuit 250 can include a control circuit 424. Control circuit 424 can supply a voltage signal that is either high or low on each of nodes 422₁...422_{M}. Inputs of inverters 410₁...410_{M} can be coupled to nodes 422₁...422_{M}, respectively. Outputs of inverters 410₁...410_{M} can be coupled to the gates of transistors 416₁...416_{M}.

Fig. 4B is a schematic diagram depicting an inverter according to some embodiments. An inverter 422ₓ (any of inverters 422) can include transistors 430 and 432. Transistor 430 can be a PMOS transistor and transistor 432 can be an NMOS transistor 432. The gates of transistors 430 and 432 can be an input of the inverter. The trains of transistors 430 and 432 can be an output of the inverter. The source of transistor 430 can be coupled to node 402. The source of transistor 432 can be coupled to node 412.

Returning to Fig. 4A, the sources of transistors 416₁...416_{M} can be coupled to a node 414 through resistors 418₁...418_{M}, respectively. The drains of transistors 416₁...416_{M} can be coupled to node 72 (providing the common-mode voltage Vcm). A resistor 420 can be coupled between nodes 414 and 72. The gate of transistor 404 can be coupled to node 414.

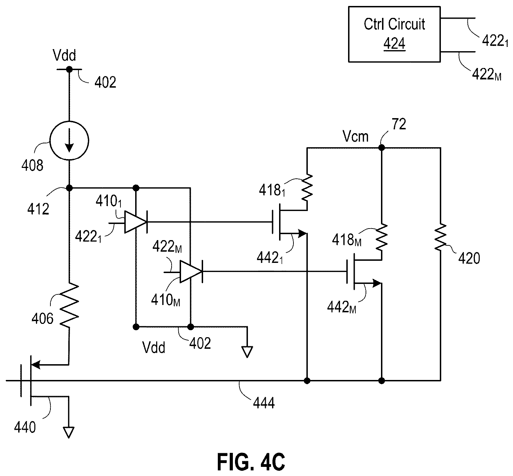

Fig. 4C is a schematic diagram depicting common-mode sensing circuit 250 according to further embodiments. The embodiment shown can generate a common-mode voltage for PMOS switches (e.g., Fig. 3C). Common-mode sensing circuit 250 can include a transistor 440 and transistors 442₁...442_{M} (where M is an integer greater than zero). The drain of transistor 440 can be coupled to ground. The source of transistor 440 can be coupled to current source 408 through resistor 406. That is, the source of transistor 440 can be coupled to node 412 through resistor 406. Current source 408 can be coupled to node 402 providing the supply voltage. Common-mode sensing circuit 250 can include inverters 422₁...422_{M}. Common-mode sensing circuit 250 can include control circuit 424. Control circuit 424 can supply a voltage signal that is either high or low on each of nodes 422₁...422_{M}. Inputs of inverters 410₁...410_{M} can be coupled to nodes 422₁...422_{M}, respectively. Outputs of inverters 410₁...410_{M} can be coupled to the gates of transistors 442₁...442_{M}. The sources of transistors 442₁...442_{M} can be coupled to a node 444. The drains of transistors 442₁...442_{M} can be coupled to node 72 (providing the common-mode voltage Vcm) through resistors 418₁...418_{M}, respectively. A resistor 420 can be coupled between nodes 444 and 72. The gate of transistor 440 can be coupled to node 444. Inverters 410 can be configured as shown in Fig. 4B.

Referring to Figs. 4A and 4C, common-mode sensing circuit 250 can accurately track a wide range of common-mode voltage (Vcm). A control voltage on node 412 can be adjusted to ensure that the Vgs of the termination switches remains stable over PVT and input common mode voltage variations. Control circuit 424 can selectively turn on and off transistors 416 (or 442) to adjust the common-mode voltage (Vcm) of the termination resistors. Current source 408 can be a band-gap reference current.

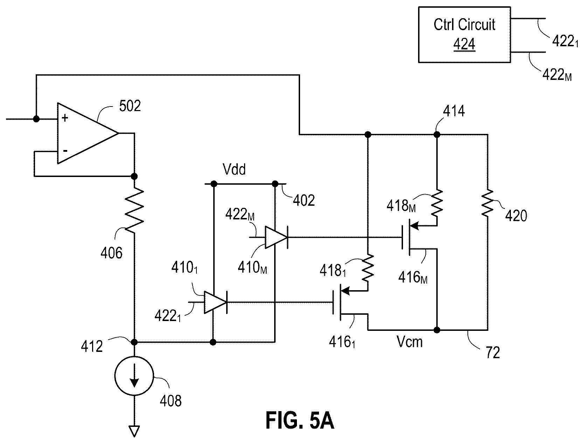

Fig. 5A is a schematic diagram depicting common-mode sensing circuit 250 according to some embodiments. Elements of Fig. 5A that are the same or similar to those of Fig. 4A are designated with identical reference numerals and described above. In the embodiment, transistor 404 can be replaced with an operational amplifier 502. The inverting input of operational amplifier 502 can be coupled to node 412. The non-inverting input of operational amplifier 502 can be coupled to node 412 through resistor 406. The output of operational amplifier 502 can be coupled to node 412 through resistor 406. The source terminals of operational amplifier 502 (Vdd and ground) are omitted for clarity.

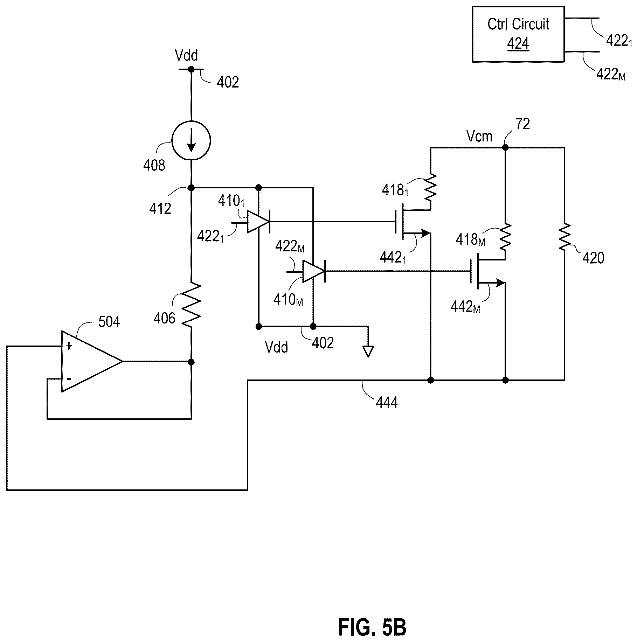

Fig. 5B is a schematic diagram depicting common-mode sensing circuit 250 according to some embodiments. Elements of Fig. 5B that are the same or similar to those of Fig. 4C are designated with identical reference numerals and described above. In the embodiment, transistor 440 can be replaced with an operational amplifier 504. The inverting input of operational amplifier 504 can be coupled to node 412 through resistor 406. The non-inverting input of operational amplifier 504 can be coupled to node 444. The output of operational amplifier 504 can be coupled to node 412 through resistor 406. The source terminals of operational amplifier 502 (Vdd and ground) are omitted for clarity.

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C ," or alternatively, "at least one of A, at least one of B, and at least one of C," it is expressly described as such.

It will be understood that, although the terms "first," "second," etc. may be used herein to describe various elements, these elements should not be limited by these terms. These terms are only used to distinguish one element from another. For example, a first element could be termed a second element, and, similarly, a second element could be termed a first element, without departing from the scope of the present disclosure.

As used herein, the term "couple" or "connect" and its derivatives include: (a) electrical and communicative coupling or connecting; and (b) do not imply a direct coupling or connection, but rather may include intervening elements, unless described as "directly coupled" or "directly connected."

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

## Claims

1. An apparatus for supplying a voltage to a termination in a receiver, the circuit comprising:
a first circuit coupled to a current source through a first resistor;
first and second inverters coupled between a supply voltage and a first node between the first resistor and the current source;
second and third resistors;
first and second transistors, gates of the first and second transistors coupled to outputs of the first and second inverters, respectively, drains of the first and second transistors coupled to a second node, sources of the first and second transistors coupled to a third node through the second and third resistors, respectively;
wherein the first circuit is coupled to the third node and the second node is configured to supply the voltage to the termination in the receiver.

2. The apparatus of claim 1, further comprising:
a second circuit coupled to inputs of the first and second inverters.

3. The apparatus of claim 1 or 2, further comprising:
a fourth resistor coupled between the second and third nodes.

4. The apparatus of any one of the claims 1 to 3, wherein
the first circuit comprises a third transistor, a drain of the third transistor coupled to the supply voltage, a source of the third transistor coupled to the current source through the first resistor, and a gate of the third transistor coupled to the third node.

5. The apparatus of any one of the claims 1 to 3, wherein
the first circuit comprises a third transistor, a drain of the third transistor coupled to electrical ground, a source of the third transistor coupled to the current source through the first resistor, and a gate of the third transistor coupled to the third node.

6. The apparatus of any one of the claims 1 to 5, wherein
the first circuit comprises an operational amplifier, a non-inverting input of the operational amplifier coupled to the third node, an inverting input of the operational amplifier coupled to the first node, and an output of the operational amplifier coupled to the current source through the first resistor.

7. The apparatus of any one of the claims 1 to 5, wherein
the first circuit comprises an operational amplifier, a non-inverting input of the operational amplifier coupled to the third node, an inverting input of the operational amplifier coupled to the current source through the first resistor, and an output of the operational amplifier coupled to the inverting input.

8. A receiver, comprising:
an analog front-end (AFE) having an input coupled to a transmission medium through a capacitor; and
a termination coupled to the input of the AFE;
a first circuit configured to supply a voltage to the termination, the first circuit comprising:
a second circuit coupled to a current source through a first resistor;
first and second inverters coupled between a supply voltage and a first node between the first resistor and the current source;
second and third resistors;
first and second transistors, gates of the first and second transistors coupled to outputs of the first and second inverters, respectively, drains of the first and second transistors coupled to a second node, sources of the first and second transistors coupled to a third node through the second and third resistors, respectively;
wherein the second circuit is coupled to the third node and the second node is configured to supply the voltage to the termination.

9. The receiver of claim 8, further comprising:
a third circuit coupled to inputs of the first and second inverters.

10. The receiver of claim 8 or 9, further comprising:
a fourth resistor coupled between the second and third nodes.

11. The receiver of any one of the claims 1 to 10, wherein
the second circuit comprises a third transistor, a drain of the third transistor coupled to the supply voltage, a source of the third transistor coupled to the current source through the first resistor, and a gate of the third transistor coupled to the third node.

12. The receiver of any one of the claims 1 to 10, wherein
the second circuit comprises a third transistor, a drain of the third transistor coupled to electrical ground, a source of the third transistor coupled to the current source through the first resistor, and a gate of the third transistor coupled to the third node.

13. The receiver of any one of the claims 1 to 12, wherein
the second circuit comprises an operational amplifier, a non-inverting input of the operational amplifier coupled to the third node, an inverting input of the operational amplifier coupled to the first node, and an output of the operational amplifier coupled to the current source through the first resistor.

14. The receiver of any one of the claims 1 to 12, wherein
the second circuit comprises an operational amplifier, a non-inverting input of the operational amplifier coupled to the third node, an inverting input of the operational amplifier coupled to the current source through the first resistor, and an output of the operational amplifier coupled to the inverting input.

15. A communication system, comprising:
a transmission medium;
an integrated circuit (IC) coupled to the transmission medium, the IC including a receiver as set forth in any one of the preceding claims 8 to 14.
